# EUROPEAN PATENT SPECIFICATION

(11) **EP 3 632 590 B1**
(45) Date of publication and mention of the grant of the patent: **12.06.2024**
(21) Application number: 19196685.2
(22) Date of filing: 11.09.2019
(51) Int. Cl.: B29C 64/364, B22F 10/28, B22F 12/00, B22F 12/33, B22F 12/70, B33Y 10/00, B33Y 30/00, B33Y 40/00

(54) **ADDITIVE MANUFACTURING MACHINE HAVING RECONFIGURABLE GAS NOZZLES**
VORRICHTUNG MIT REKONFIGURIERBAREN GASDÜSEN ZUR GENERATIVEN FERTIGUNG
MACHINE DE FABRICATION ADDITIVE AYANT DES BUSES DE GAZ RECONFIGURABLES

(30) Priority: 05.10.2018 US 201816152555
(43) Date of publication of application: 08.04.2020
(73) Proprietor: General Electric Company, Schenectady, NY 12345 (US)
(72) Inventor: Carter, William Thomas, Niskayuna, NY New York 12309 (US); Monaghan, William Francis, Niskayuna, NY New York 12309 (US); Hayden, Christopher James, Niskayuna, NY New York 12309 (US); Tucker, Michael Robert, Niskayuna, NY New York 12309 (US)
(74) Representative: Hafner & Kohl PartmbB

(56) References cited:
- WO-A1-2014/199150
- DE-A1-102013 215 377
- US-A1- 2018 200 963

## Description

### INTRODUCTION

The present disclosure generally relates to an additive manufacturing apparatus. More specifically, the present disclosure relates to nozzles for an additive manufacturing apparatus that can be reconfigured, readily exchanged and moved to improve build performance.

### BACKGROUND

Additive manufacturing (AM) encompasses a variety of technologies for producing components in an additive, layer-wise fashion. In powder bed fusion which is one of the most popular AM technologies, a focused energy beam is used to fuse powder particles together on a layer-wise basis. The energy beam may be either an electron beam or laser. Laser powder bed fusion processes are referred to in the industry by many different names, the most common of which being selective laser sintering (SLS) and selective laser melting (SLM), depending on the nature of the powder fusion process. When the powder to be fused is metal, the terms direct metal laser sintering (DMLS) and direct metal laser melting (DMLM) are commonly used.

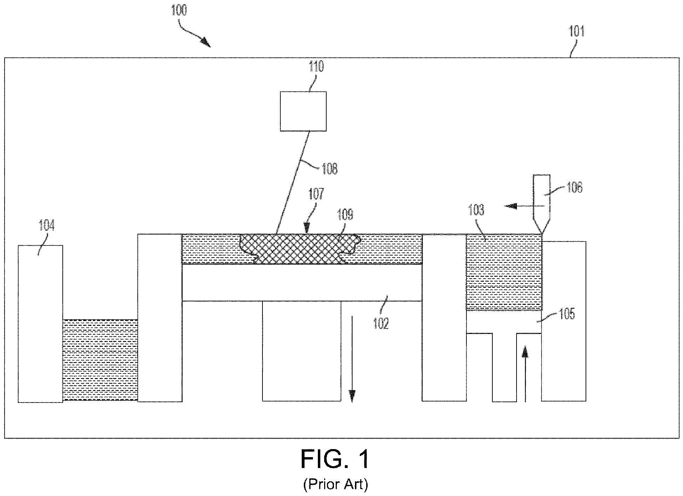

Referring to FIG. 1, a laser powder bed fusion system 100 includes a fixed and enclosed build chamber 101. Inside the build chamber 101 is a build plate 102 and an adjacent feed powder reservoir 103 at one end and an excess powder receptacle 104 at the other end. During production, an elevator 105 in the feed powder reservoir 103 lifts a prescribed dose of powder to be spread across the build surface defined by the build plate 102 using a recoater blade 106. Powder overflow is collected in powder receptacle 104, and optionally treated to filter out rough particles before re-use.

Selected portions 107 of the powder layer are irradiated in each layer using, for example, a laser beam 108. After irradiation, the build plate 102 is lowered by a distance equal to one layer thickness in the object 109 being built. A subsequent layer of powder is then coated over the last layer and the process repeated until the object 109 is complete. The laser beam 108 movement is controlled using galvo scanner 110. The laser source (not shown) may be transported from a laser source (not shown) using a fiber optic cable. The selective irradiation is conducted in a manner to build object 109 an accordance with computer-aided design (CAD) data.

Powder bed technologies have demonstrated the best resolution capabilities of all known metal additive manufacturing technologies. However, since the build needs to take place in the powder bed, the size of object to be built is limited by the size of the machine's powder bed. Increasing the size of the powder bed has limits due to the needed large angle of incidence that can lower scan quality, and weight of the powder bed which can exceed the capabilities of steppers used to lower the build platform. In view of the foregoing, there remains a need for a manufacturing apparatus that can handle production of large objects with improved precision and in a manner that is both time and cost-efficient with a minimal waste of raw materials.

### SUMMARY

The present invention is defined by the independent claim. Advantageous embodiments are described in dependent claims. In a first aspect, an additive manufacturing apparatus has at least one build unit with a powder delivery mechanism, a powder recoating mechanism and an irradiation beam directing mechanism. The additive manufacturing apparatus can also include a rotating build platform, a gas inlet nozzle and a gas exhaust nozzle. The gas nozzles direct gas across the build platform or build site or evacuate gas therefrom. A positioning mechanism is connected to the gas inlet nozzle and the gas exhaust nozzle, and the positioning mechanism provides independent movement of the gas inlet nozzle and the gas exhaust nozzle.

In a second aspect, an additive manufacturing apparatus includes at least one build unit having a powder delivery mechanism, a powder recoating mechanism and an irradiation beam directing mechanism. The additive manufacturing apparatus also includes a build platform, a gas inlet nozzle and a gas exhaust nozzle, as well as a positioning mechanism connected to the gas inlet nozzle and the gas exhaust nozzle. The positioning mechanism is configured to provide independent movement of the gas inlet nozzle and the gas exhaust nozzle. The positioning mechanism has a first articulated arm connected to the gas inlet nozzle, and a second articulated arm connected to the gas exhaust nozzle.

### BRIEF DESCRIPTION OF THE DRAWINGS

FIG. 1 illustrates an exemplary prior art powder bed based system for additive manufacturing.
FIG. 2 illustrates a schematic diagram showing a front view, cross section of an additive manufacturing apparatus, according an aspect of the present disclosure.
FIG. 3 illustrates a nozzle having a circular cross-sectional shape, according an aspect of the present disclosure.
FIG. 4 illustrates a nozzle having an oval cross-sectional shape, according an aspect of the present disclosure.
FIG. 5 illustrates a nozzle having a rectangular cross-sectional shape, according an aspect of the present disclosure.
FIG. 6 illustrates a nozzle having a rectangular with rounded corners cross-sectional shape, according an aspect of the present disclosure.
FIG. 7 illustrates a nozzle having a trapezoidal cross-sectional shape, according an aspect of the present disclosure.
FIG. 8 illustrates a nozzle having a trapezoidal with rounded corners cross-sectional shape, according an aspect of the present disclosure.
FIG. 9 illustrates a nozzle having an open interior, according an aspect of the present disclosure.
FIG. 10 illustrates a nozzle having a slot located at the bottom thereof to adjust gas flow characteristics, according an aspect of the present disclosure.
FIG. 11 illustrates a nozzle having a plurality of rectangular channels to adjust gas flow characteristics, according an aspect of the present disclosure.
FIG. 12 illustrates a nozzle having a plurality of circular channels to adjust gas flow characteristics, according an aspect of the present disclosure.
FIG. 13 illustrates a nozzle having a plurality of polygonal or hexagonal channels to adjust gas flow characteristics, according an aspect of the present disclosure.
FIG. 14 illustrates a nozzle having a slotted channel with graduated sized opening along a length thereof to adjust gas flow characteristics, according an aspect of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details.

The present invention provides an apparatus and embodiments of the apparatus that can be used to perform powder-based additive layer manufacturing of a large object. Examples of powder-based additive layer manufacturing include but are not limited to selective laser sintering (SLS), selective laser melting (SLM), direct metal laser sintering (DMLS), direct metal laser melting (DMLM) and electron beam melting (EBM) processes.

An additive manufacturing apparatus provided herein includes a build unit assembly, which is configured to include several components that are essential for additively manufacturing high-precision, large-scale objects. These build components include, for example, a powder recoating mechanism and an irradiation beam directing mechanism. The build unit is advantageously attached to a positioning mechanism that allows two- or three-dimensional movement (along x-, y- and z-axes) throughout the build environment, as well as rotation of the build unit in a way that allows leveling of the powder in any direction desired. The positioning mechanism may be a gantry, a delta robot, a cable robot, a robotic arm, a belt drive, or the like.

Aside from the build unit, an additive manufacturing apparatus of the present invention also includes a rotating build platform, or any kind of additive manufacturing machine where the scan head moves relative to the build plate. For example, this includes an X, Y, Z gantry system where the processing area moves about the build plate. Preferably, this build platform has a substantially circular configuration but is not so limited. Since the build unit of the apparatus is mobile, this eliminates the need to lower the build platform as successive layers of powder are built up, as it is in conventional powder bed systems. Accordingly, the rotating build platform of the present invention is preferably vertically stationary.

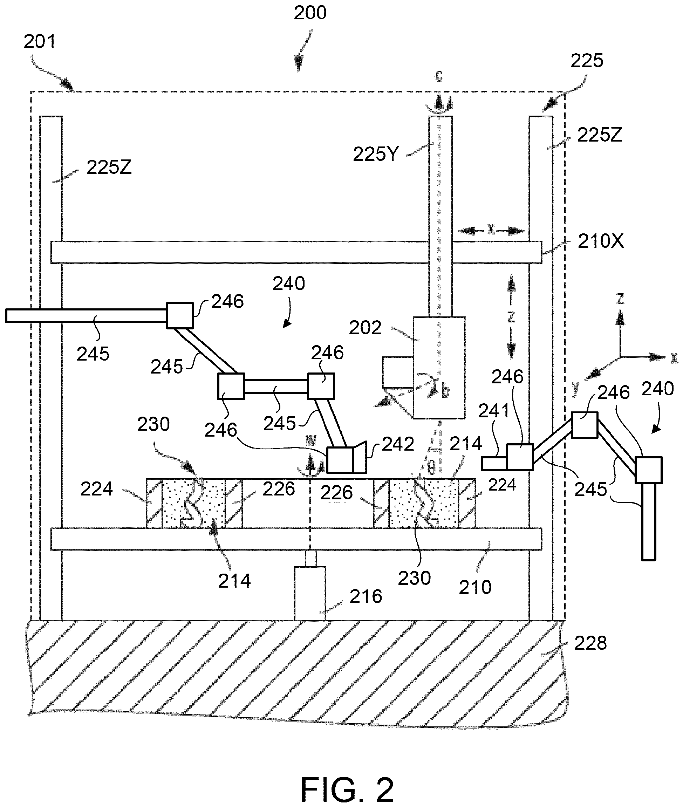

FIG. 2 depicts a schematic representation of an additive manufacturing apparatus 200 of an embodiment of the present disclosure. The apparatus 200 may include a build enclosure 201 housing the entire apparatus 200 and object 230 to be built. The apparatus 200 includes a build unit 202 and a rotating build platform 210. During operation, the apparatus builds an object 230 in a powder bed 214 formed between an outer grown build envelope 224 and, in many cases, an inner build envelope 226. The object 230 may be a large annular object, such as, but not limited to, a turbine or vane shrouding, a central engine shaft, a casing, a compressor liner, a combustor liner, a duct, an array of smaller objects arranged onto the large build plate, etc.

The build unit 202 may be configured to include several components for additively manufacturing a high-precision, large-scale object or multiple smaller objects. A mobile build unit 202 includes a powder delivery mechanism, a powder recoating mechanism, a gas-flow mechanism with a gas-flow zone and an irradiation beam directing mechanism.

The build unit positioning mechanism 225 may be an X-Y-Z gantry that has one or more x-crossbeams 225X (one shown in FIG. 2) that independently move the build unit 202 along the x-axis (i.e. left or right), one or more y-crossbeams 225Y (one shown in FIG. 2) that respectively move the build unit 202 along the y-axis (i.e. inward or outward). Such two-dimensional movements across the x-y plane are substantially parallel to the build platform 210 or a build area therewithin. Additionally, the build unit positioning mechanism 225 has one or more z-crossbeams 225Z (two shown in FIG. 2) that moves the build unit 202 along the z-axis (i.e. upward and downward or substantially perpendicular to the build platform 210 or a build area therewithin). The build unit positioning mechanism 225 is further operable to rotate the build unit 202 around the c-axis and also the b-axis. The build unit positioning mechanism 225 may also be a robotic arm (not shown) or other suitable mechanism as desired in the specific application.

The rotating build platform 210 may be a rigid, ring-shaped or annular structure (i.e. with an inner central hole) configured to rotate 360° around the center of rotation W, or the build platform may be a disk without a central hole. The rotating build platform 210 may be secured to an end mount of a motor 216 that is operable to selectively rotate the rotating build platform 210 around the center of rotation W such that the build platform 210 moves in a circular path. The motor 216 may be further secured to a stationary support structure 228. The motor may also be located elsewhere near the apparatus and mechanically connected with the build platform via a belt for translating motion of the motor to the build platform.

The gas-flow mechanism comprises a nozzle positioning mechanism 240 having articulated arms 245 attached to a gas inlet nozzle 241 and a gas exhaust nozzle 242. Arm sections are joined by joints 246 that permit each arm section to articulate and move in three dimensions. The gas inlet nozzle 241 and the gas exhaust nozzle 242 are used to direct a flow of inert gas across (e.g., from left to right in FIG. 2) the build area, so that smoke and particulates may be moved away from the laser beam emanating from build unit 202. The gas inlet nozzle 241 blows the inert gas across the build area and the gas exhaust nozzle 242 sucks in the smoke and particulates. The articulated arms 245 and joints 246 of the nozzle positioning mechanism 240 permits the nozzles 241, 242 to be independently moved into any desired position in the X-Y plane, as well as any desired height along the Z-axis. This is very important as the build progresses because the build platform height is fixed along the Z-axis, and the nozzles 241 and 242 will need to be raised vertically as the build layers accumulate to maintain the desired flow pattern of inert gas along the top build layer of object 230. The nozzle positioning mechanism 240 also allows the angular direction of the nozzles 241, 242 in the X-Y plane to be adjusted, as well as permitting the nozzles to be angled up or down with respect to the Z-axis. This high degree of positional variability permits the additive manufacturing apparatus 200 to direct the flow of inert gas exactly where it can provide the most benefit to improve build quality. The articulated arms 245 may be connected to and controlled by a computer-controlled system or robotic controller. The inert gas conduit (not shown) may also be routed either internally within the arms 245 or attached to the exterior thereof. The positioning mechanism 240 may also provide independent yaw, pitch and roll movement of the gas inlet nozzle and the gas exhaust nozzle. The yaw axis is the Z-axis, and the nozzles can be oriented in any direction by pivoting or turning on this axis (e.g., nozzle oriented at 270 degrees in an X-Y plane). The roll axis is perpendicular to the yaw axis and the nozzle can rotate about this axis (e.g. nozzle oriented at 270 degrees but rotated or turned about this direction circumferentially). The pitch axis is perpendicular to both the yaw and roll axes, and the nozzle can rotate about this axis as well.

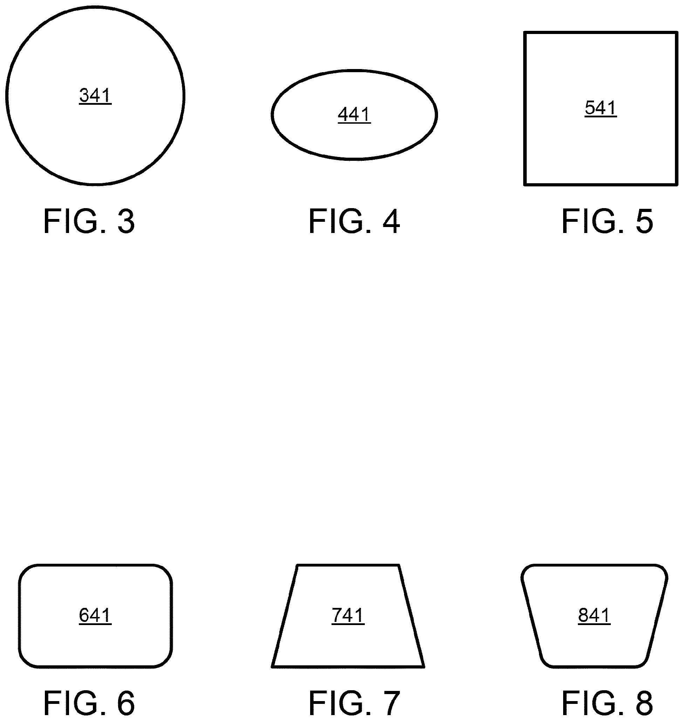

Each of the gas inlet nozzle 241 and the gas exhaust nozzle 242 are configured to be readily replaceable and exchangeable as desired for the specific build or object being built. Each nozzle 241, 242 can be easily and quickly removed from the nozzle positioning mechanism 240 and replaced with another nozzle having a different size and/or shape. FIGs. 3-8 illustrate various cross-sectional shapes of the gas inlet nozzle 241 and/or the gas exhaust nozzle 242. FIG. 3 illustrates a nozzle 341 having a circular cross-sectional shape. FIG. 4 illustrates a nozzle 441 having an oval cross-sectional shape. FIG. 5 illustrates a nozzle 541 having a rectangular cross-sectional shape, which is also one example of a polygonal shape. It is to be understood that the nozzle may have any desired polygonal shape as desired in the specific application, including but not limited to T-shapes, triangular shapes or any other polygonal shape. FIG. 6 illustrates a nozzle 641 having a rectangular with rounded corners cross-sectional shape. FIG. 7 illustrates a nozzle 741 having a trapezoidal cross-sectional shape. FIG. 8 illustrates a nozzle 841 having a trapezoidal with rounded corners cross-sectional shape. In addition to the cross-sectional shape, the length, curvature, internal profile or other characteristic of the nozzles may be modified to better perform in specific applications. For example, the interior of the nozzle may incorporate interior baffles or channels to maintain a laminar flow of inert gas across the build area. The nozzle may also be tapered so that it either converges or diverges along an axial length thereof.

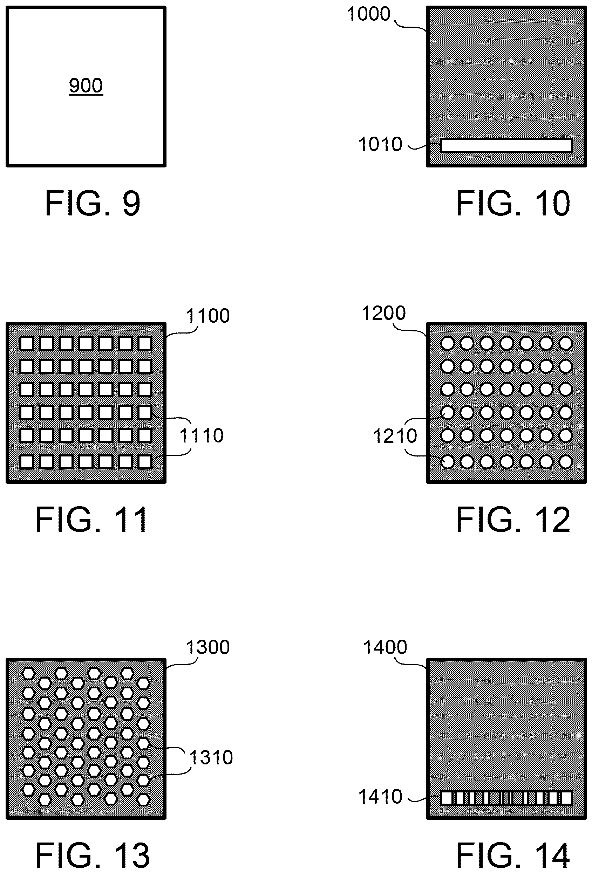

FIG. 9 illustrates a nozzle 900 having an open interior. This configuration permits gas flow out of (or into) the entire inner area of the nozzle 900. FIG. 10 illustrates a nozzle 1000 having a slot 1010 located at the bottom thereof to adjust gas flow characteristics. This may be desired when gas flow needs to be focused along a lower portion of the nozzle area or build area. FIG. 11 illustrates a nozzle 1100 having a plurality of rectangular channels 1110 to adjust gas flow characteristics. FIG. 12 illustrates a nozzle 1200 having a plurality of circular channels 1210 to adjust gas flow characteristics. FIG. 13 illustrates a nozzle 1300 having a plurality of polygonal or hexagonal channels 1310 to adjust gas flow characteristics. FIG. 14 illustrates a nozzle 1400 having a slotted channel 1410 with graduated sized openings along a length thereof to adjust gas flow characteristics. The openings are larger towards opposing ends of slot 1410 and progressively become narrower as they approach the center of the slot 1410. This may be desired when gas flow in the center of the nozzle is stronger (i.e., higher velocity) than in side portions of the nozzle, and a laminar velocity gas flow is desired. Alternatively, the slot openings may be reversed, with larger slot openings in the center and smaller opening towards the sides. All of the channels illustrated in and described in conjunction with FIGs. 9-14 may be used to straighten gas flow or modify gas flow direction or velocity to optimize gas flow across the build platform or build site.

Representative examples of suitable powder materials can include metallic alloy, polymer, or ceramic powders. Exemplary metallic powder materials are stainless steel alloys, cobalt-chrome, aluminum alloys, titanium alloys, nickel based superalloys, and cobalt based superalloys. In addition, suitable alloys may include those that have been engineered to have good oxidation resistance, known "superalloys" which have acceptable strength at the elevated temperatures of operation in a gas turbine engine, e.g. Hastelloy, Inconel alloys (e.g., IN 738, IN 792, IN 939), Rene alloys (e.g., Rene N4, Rene N5, Rene 80, Rene 142, Rene 195), Haynes alloys, Mar M, CM 247, CM 247 LC, C263, 718, X-750, ECY 768, 282, X45, PWA 1483 and CMSX (e.g. CMSX-4) single crystal alloys. The manufactured objects of the present invention may be formed with one or more selected crystalline microstructures, such as directionally solidified ("DS") or single-crystal ("SX").

This written description uses examples to disclose the invention, including the preferred embodiments, and also to enable any person skilled in the art to practice the invention, including making and using any devices or systems and performing any incorporated methods. The patentable scope of the invention is defined by the claims.

## Claims

1. An additive manufacturing apparatus (200), comprising:
at least one build unit (202) comprising a powder delivery mechanism, a powder recoating mechanism and an irradiation beam directing mechanism;
a build platform (210);
a gas inlet nozzle (241) and a gas exhaust nozzle (242); and a positioning mechanism (240) connected to the gas inlet nozzle (241) and the gas exhaust nozzle (242), the positioning mechanism (240) configured to provide independent movement of the gas inlet nozzle (241) and the gas exhaust nozzle (242); and
wherein the positioning mechanism (240) is comprised of a first articulated arm connected to the gas inlet nozzle (241), and a second articulated arm connected to the gas exhaust nozzle (242);
wherein the positioning mechanism (240) is further configured to provide independent movement of the gas inlet nozzle (241) and the gas exhaust nozzle (242) in at least two dimensions that are substantially parallel to the build platform (210) and a third dimension that is substantially perpendicular to the build platform (210).

2. The additive manufacturing apparatus of claim 1, wherein the gas inlet nozzle (241) has an exit shape chosen from one of:
circular, oval, rectangular, rectangular with rounded corners, trapezoidal, trapezoidal with rounded corners, or polygonal.

3. The additive manufacturing apparatus of claim 1 or 2, wherein the gas exhaust nozzle (242) has an entrance shape chosen from one of:
circular, oval, rectangular, rectangular with rounded corners, trapezoidal, trapezoidal with rounded corners, or polygonal.

4. The additive manufacturing apparatus of any one of the preceding claims, wherein the gas inlet nozzle (241) and the gas exhaust nozzle (242) are configured to be readily replaceable so nozzles of different shapes can be used in the additive manufacturing apparatus (200).

5. The additive manufacturing apparatus of any one of the preceding claims, wherein the build platform (210) comprises a ring-shaped or annular structure configured to rotate 360° around the center of rotation.

6. The additive manufacturing apparatus of any one of the preceding claims, wherein the positioning mechanism (240) is further configured to provide independent yaw, pitch, and roll movement of the gas inlet nozzle (241) and the gas exhaust nozzle (242).

7. The additive manufacturing apparatus of any one of the preceding claims, wherein the build platform (210) is configured as a rotating build platform.

8. The additive manufacturing apparatus of claim 7, wherein the rotating build platform is vertically stationary.

9. The additive manufacturing apparatus of claim any one of the preceding claims, wherein the at least one build unit : (202)
further comprises a gas-flow mechanism including the gas inlet nozzle (241) and the gas exhaust nozzle (242),
and the gas-flow mechanism provides a substantially laminar gas flow to at least one build area of the build platform (210).

10. The additive manufacturing apparatus of any one of the preceding claims, wherein the irradiation beam directing mechanism further comprises a laser source or an electron source.

11. The additive manufacturing apparatus of claim 10, wherein the irradiation beam directing mechanism emits and directs a laser beam or an electron beam at an angle that is substantially perpendicular to a build area of the build platform (210).

12. The additive manufacturing apparatus of any one of the preceding claims, wherein the apparatus is configured to build an object in a powder bed formed between an outer grown build envelope (224) and an inner build envelope (226).

13. The additive manufacturing apparatus of claim 12, wherein the object comprises a turbine or vane shrouding, a central engine shaft, a casing, a compressor liner, a combustor liner, or a duct.

14. The additive manufacturing apparatus of any one of the preceding claims, wherein the positioning mechanism (240) is configured to raise vertically the gas inlet nozzle (241) and the gas exhaust nozzle (242) as build layers accumulate to maintain a desired flow pattern of inert gas along a top build layer.

## Patentansprüche

1. Eine Vorrichtung zur additiven Herstellung (220), die Folgendes umfasst:
mindestens eine Baueinheit (202), die einen Pulverabgabemechanismus, einen Pulverüberzugsmechanismus und einen Bestrahlungsstrahllenkmechanismus umfasst;
eine Bauplattform (210);
eine Gaseinlassdüse (241) und eine Gasauspuffdüse (242); und
einen Positioniermechanismus (240), der mit der Gaseinlassdüse (241) und der Gasauspuffdüse (242) verbunden ist, der Positionierungsmechanismus (240), der so konfiguriert ist, dass die Gaseinlassdüse (241) und die Gasabgasdüse (242) unabhängig bewegt werden; und
wobei der Positionierungsmechanismus (240) aus einem ersten Gelenkarm besteht, der mit der Gaseinlassdüse (241) verbunden ist, und einem zweiten Gelenkarm, der mit der Gasabgasdüse (242) verbunden ist;
wobei der Positionierungsmechanismus (240) weiter konfiguriert ist, um eine unabhängige Bewegung der Gaseinlassdüse (241) und der Gasabgasdüse (242) in mindestens zwei Dimensionen zu gewährleisten, die im Wesentlichen parallel zur Bauplattform (210) und einer dritten Dimension sind, die im Wesentlichen senkrecht zur Bauplattform (210) ist.

2. Die Vorrichtung zur additiven Herstellung nach Anspruch 1, wobei die Gaseintrittsdüse (241) eine Austrittsform aufweist, die aus einer der folgenden Eigenschaften gewählt wird:
rund, oval, rechteckig, rechteckig mit abgerundeten Ecken, trapezförmig, trapezförmig mit abgerundeten Ecken oder polygonal.

3. Die Vorrichtung zur additiven Herstellung nach Anspruch 1 oder 2, wobei die Gasauspuffdüse (242) eine Eingangsform aufweist, die aus einer der folgenden Eigenschaften gewählt wird:
rund, oval, rechteckig, rechteckig mit abgerundeten Ecken, trapezförmig, trapezförmig mit abgerundeten Ecken oder polygonal.

4. Die Vorrichtung zur additiven Herstellung nach einem der vorhergehenden Ansprüche, wobei die Gaseinlassdüse (241) und die Gasabgasdüse (242) so konfiguriert sind, dass sie leicht austauschbar sind, so dass Düsen unterschiedlicher Formen in der additiven Herstellungsvorrichtung (200) verwendet werden können.

5. Die Vorrichtung zur additiven Herstellung nach einem der vorhergehenden Ansprüche, wobei die Bauplattform (210) eine ringförmige oder ringförmige Struktur aufweist, die so konfiguriert ist, dass sie sich um das Drehzentrum um 360° dreht.

6. Die Vorrichtung zur additiven Herstellung nach einem der vorhergehenden Ansprüche,wobei der Positionierungsmechanismus (240) weiter konfiguriert ist, um unabhängige Gier-, Pitch- und Rollenbewegung der Gaseinlassdüse (241) und der Gasauspuffdüse (242) zu gewährleisten.

7. Die Vorrichtung zur additiven Herstellung nach einem der vorhergehenden Ansprüche, wobei die Bauplattform (210) als rotierende Bauplattform konfiguriert ist.

8. Die Vorrichtung zur additiven Herstellung nach Anspruch 7, wobei die rotierende Bauplattform vertikal stationär ist.

9. Die Vorrichtung zur additiven Herstellung nach einem der vorhergehenden Ansprüche, wobei die mindestens eine Baueinheit (202) ferner einen Gasstrommechanismus einschließlich der Gaseinlassdüse (241) und der Gasauspuffdüse (242) umfasst und der Gasstrommechanismus einen im Wesentlichen laminaren Gasfluss zu mindestens einem Baubereich der Bauplattform (210) bietet.

10. Die Vorrichtung zur additiven Herstellung nach einem der vorhergehenden Ansprüche, wobei der Bestrahlungsstrahllenkmechanismus weiter eine Laserquelle oder eine Elektronenquelle umfasst.

11. Die Vorrichtung zur additiven Herstellung nach Anspruch 10, wobei der Bestrahlungsstrahllenkmechanismus einen Laserstrahl oder einen Elektronenstrahl in einem Winkel ausstrahlt und lenkt, der im Wesentlichen senkrecht zu einer Baufläche der Bauplattform (210) ist.

12. Die Vorrichtung zur additiven Herstellung nach einem der vorhergehenden Ansprüche, wobei die Vorrichtung so konfiguriert ist, dass sie einen Gegenstand in einem Pulverbett baut, das zwischen einer äußeren gewachsenen Bauhülle (224) und einer inneren Bauhülle (226) gebildet ist.

13. Die Vorrichtung zur additiven Herstellung nach Anspruch 12, wobei die Aufgabe eine Turbine oder eine Flügelschleuse, eine zentrale Motorwelle, ein Gehäuse, einen Kompressorliner, einen Brennerauskleidung oder einen Kanal umfasst.

14. Die Vorrichtung zur additiven Herstellung nach einem der vorhergehenden Ansprüche, wobei der Positionierungsmechanismus (240) so konfiguriert ist, dass die Gaseinlassdüse (241) und die Gasauspuffdüse (242) als Aufbauschichten angehoben werden, um ein gewünschtes Strömungsmuster aus inertem Gas entlang einer obersten Bauschicht aufrechtzuerhalten.

## Revendications

1. Un appareil de fabrication additive (220), comprenant:
au moins une unité de construction (202) comprenant un mécanisme de distribution de poudre, un mécanisme de revêtement de poudre et un mécanisme de direction du faisceau d'irradiation;
une plate-forme de construction (210);
une buse d'entrée de gaz (241) et une buse d'échappement de gaz (242); et
un mécanisme de positionnement (240) relié à la buse d'entrée de gaz (241) et à la buse d'échappement de gaz (242), le mécanisme de positionnement (240) configuré pour assurer un mouvement indépendant de la buse d'entrée de gaz (241) et de la buse d'échappement de gaz (242); et
dans lequel le mécanisme de positionnement (240) est composé d'un premier bras articulé relié à la buse d'entrée de gaz (241), et d'un second bras articulé relié à la buse d'échappement de gaz (242);
dans laquelle le mécanisme de positionnement (240) est en outre configuré pour assurer un mouvement indépendant de la buse d'entrée de gaz (241) et de la buse d'échappement de gaz (242) dans au moins deux dimensions qui sont sensiblement parallèles à la plate-forme de construction (210) et une troisième dimension qui est sensiblement perpendiculaire à la plate-forme de construction (210).

2. L'appareil de fabrication additive de la revendication 1, dans lequel la buse d'entrée de gaz (241) a une forme de sortie choisie parmi:
circulaire, ovale, rectangulaire, rectangulaire avec des coins arrondis, trapézoïdale, trapézoïdale avec des coins arrondis, ou polygonale.

3. L'appareil de fabrication additive de la revendication 1 ou 2, dans lequel la buse d'échappement des gaz (242) a une forme d'entrée choisie parmi:
circulaire, ovale, rectangulaire, rectangulaire avec des coins arrondis, trapézoïdale, trapézoïdale avec des coins arrondis, ou polygonale.

4. L'appareil de fabrication additive de l'une quelconque des revendications précédentes, dans lequel la buse d'entrée de gaz (241) et la buse d'échappement de gaz (242) sont configurées pour être facilement remplaçables afin que des buses de différentes formes puissent être utilisées dans l'appareil de fabrication additive (200).

5. L'appareil de fabrication additive de l'une quelconque des revendications précédentes, dans lequel la plate-forme de construction (210) comprend une structure annulaire ou en forme d'anneau configurée pour pivoter à 360 ° autour du centre de rotation.

6. L'appareil de fabrication additive de l'une quelconque des revendications précédentes, dans lequel le mécanisme de positionnement (240) est en outre configuré pour assurer un mouvement de lacet, de tangage et de roulis indépendant de la buse d'entrée de gaz (241) et de la buse d'échappement de gaz (242).

7. L'appareil de fabrication additive de l'une quelconque des revendications précédentes, dans lequel la plate-forme de construction (210) est configurée comme une plate-forme de construction rotative.

8. L'appareil de fabrication additive de la revendication 7, dans lequel la plate-forme de construction rotative est verticalement stationnaire.

9. L'appareil de fabrication additive de revendication n'importe laquelle des revendications précédentes, dans lequel au moins une unité de construction (202) comprend en outre un mécanisme de flux de gaz comprenant la buse d'entrée de gaz (241) et la buse d'échappement de gaz (242), et le mécanisme de flux de gaz fournit un flux de gaz sensiblement laminaire à au moins une zone de construction de la plate-forme de construction (210).

10. Appareil de fabrication additive de l'une quelconque des revendications précédentes, dans lequel le mécanisme de direction du faisceau d'irradiation comprend en outre une source laser ou une source d'électrons.

11. L'appareil de fabrication additive de la revendication 10, dans lequel le mécanisme de direction du faisceau d'irradiation émet et dirige un faisceau laser ou un faisceau d'électrons à un angle sensiblement perpendiculaire à une zone de construction de la plate-forme de construction (210).

12. L'appareil de fabrication additive de l'une quelconque des revendications précédentes, dans lequel l'appareil est configuré pour construire un objet dans un lit de poudre formé entre une enveloppe extérieure de construction cultivée (224) et une enveloppe intérieure de construction (226).

13. L'appareil de fabrication additive de la revendication 12, dans lequel l'objet comprend un enrobage de turbine ou d'aube, un arbre central du moteur, un carter, un revêtement de compresseur, un revêtement de brûleur ou un conduit.

14. L'appareil de fabrication additive de l'une quelconque des revendications précédentes, dans lequel le mécanisme de positionnement (240) est configuré pour soulever verticalement la buse d'entrée de gaz (241) et la buse d'échappement de gaz (242) lorsque les couches de construction s'accumulent pour maintenir un schéma d'écoulement souhaité de gaz inerte le long d'une couche de construction supérieure.
